(19) Europäisches Patentamt
European Patent Office
Office européen des brevets

(11) **EP 3 614 559 B1**

(12) **EUROPEAN PATENT SPECIFICATION**

(45) Date of publication and mention of the grant of the patent:
**28.06.2023 Bulletin 2023/26**

(21) Application number: **18787754.3**

(22) Date of filing: **15.02.2018**

(51) International Patent Classification (IPC):
*H02P 21/24* (2016.01)  *H02M 7/48* (2007.01)

(52) Cooperative Patent Classification (CPC):
**H02P 21/24; H02P 21/18;** H02M 7/48;
H02P 2207/01

(86) International application number:
**PCT/JP2018/005238**

(87) International publication number:
**WO 2018/193697 (25.10.2018 Gazette 2018/43)**

(54) **INDUCTION MOTOR SPEED ESTIMATION METHOD AND POWER CONVERSION DEVICE USING SAME**

INDUKTIONSMOTORDREHZAHLSCHÄTZUNGSVERFAHREN UND LEISTUNGSUMWANDLUNGSVORRICHTUNG MIT VERWENDUNG DAVON

PROCÉDÉ D'ESTIMATION DE VITESSE DE MOTEUR À INDUCTION ET DISPOSITIF DE CONVERSION DE COURANT UTILISANT LEDIT PROCÉDÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.04.2017  JP 2017083412**

(43) Date of publication of application:
**26.02.2020 Bulletin 2020/09**

(73) Proprietor: **Hitachi Industrial Equipment Systems Co., Ltd.**
**Tokyo 101-0022 (JP)**

(72) Inventors:
• **TOBARI, Kazuaki**
**Tokyo 100-8280 (JP)**
• **IWAJI, Yoshitaka**
**Tokyo 100-8280 (JP)**
• **KANEKO, Satoru**
**Tokyo 100-8280 (JP)**
• **OOHASHI, Hironori**
**Tokyo 101-0022 (JP)**
• **NAKAMURA, Atsuhiko**
**Tokyo 101-0022 (JP)**
• **ONUMA, Yusaku**
**Tokyo 101-0022 (JP)**
• **SUGIMOTO, Takuya**
**Tokyo 101-0022 (JP)**

(74) Representative: **Mewburn Ellis LLP**
**Aurora Building**
**Counterslip**
**Bristol BS1 6BX (GB)**

(56) References cited:
**WO-A1-2016/139998**   **JP-A- H04 304 183**
**JP-A- H06 209 590**   **JP-A- 2005 057 963**

**Description**

Technical Field

The present invention relates to a speed sensorless vector control of an induction motor that does not use a speed sensor, and relates to an induction motor speed estimation method and a power conversion device using the induction motor speed estimation method.

Background Art

There is so-called speed sensorless vector control that estimates a speed of an induction motor without providing a speed sensor and controls the speed of the induction motor on the basis of a speed estimation value. JP-A-6-105580 (Patent Literature 1) is taken as background art in the technical field. In Patent Literature 1, a disturbance observer is provided to estimate a q-axis back electromotive force value, and to calculate a speed estimation value $\omega_r{}^\wedge$ by dividing by a magnetic flux coefficient according to the following Formula (1).

$$\omega_r{}^\wedge = \frac{1}{1 + T_{obs}S} \left[ \frac{V_{qc}{}^{**} - \omega_1{}^* L_\sigma{}^* \dfrac{1}{1 + T_{ACR}\,S} I_d{}^* - (R_1{}^* + R_2{}^{'*}) I_{qc} + L_\sigma{}^* s\, I_{qc}}{\dfrac{M^*}{L_2{}^*} \phi_{2d}{}^*} \right]$$

$$(\text{Formula 1})$$

Here, $R_1$ represents a primary resistance value, $R_2$' represents a secondary resistance value converted to a primary side, $L_\sigma$ represents a leakage inductance value, M represents a mutual inductance value, $L_2$ represents a secondary inductance value, and $T_{obs}$ represents a speed estimation delay time constant set in the disturbance observer.
In this method, when the primary resistance value $R_1$ changes with coil temperature inside the induction motor, an error may occur between a set value $R_1{}^*$ and the primary resistance value $R_1$ used in Formula (1). In this case, an estimation error is generated in the speed estimation value, and therefore, stable speed control cannot be performed and torque shortage occurs in a low speed range where an output voltage becomes low.
Therefore, as a control method with low sensitivity to changes in primary resistance value, a technique is described in which circuit constants of the induction motor other than the primary resistance value are assumed as true values, a γ-axis which is a primary current estimation error vector direction caused by a new primary resistance setting error and a δ-axis ahead of the γ-axis by 90 degrees are defined, and torque shortage is prevented by estimating a rotating speed on the control axes as described in JP-A-2005-057963 (Patent Literature 2).

Prior Art Literature

Patent Literature

PTL 1: JP-A-6-105580
PTL 2: JP-A-2005-057963
PTL 3: WO 2016/139998 A1 proposes a power conversion device and method for controlling the same.

Summary of Invention

Technical Problem

In the method described in Patent Literature 2, as described in <4> of claim 4 of Patent Literature 2, the formula is derived by setting constants other than the primary resistance value as true values, as described in <5> of the claim 4, a vector direction of a current estimation error $e^e iR_s$ in consideration of only the setting error of the primary resistance value is calculated from the formula, and if there is an error other than the primary resistance value, the characteristics of the speed sensorless vector control may also be deteriorated.
A purpose of the present invention is to provide a speed estimation method capable of preventing torque shortage caused by the coil temperature inside the induction motor and obtaining highly accurate speed control characteristics and to provide a power conversion device using the speed estimation method.

Solution to Problem

In view of the above background and problems, according to a first aspect of the present invention there is provided a power conversion device as specified in claim 1. The power conversion device may optionally be as specified in any one of claims 2 to 9.

According to a second aspect of the present invention there is provided a speed estimation method as specified in claim 10. The speed estimation method may optionally be as specified in any one of claims 11 to 15.

Advantageous Effect

According to the invention, it is possible to provide a speed estimation method capable of preventing torque shortage caused by the coil temperature inside the induction motor and obtaining highly accurate speed control characteristics and a power conversion device using the speed estimation method.

Brief Description of Drawings

[FIG. 1] FIG. 1 is a configuration diagram of a power conversion device in a first embodiment.
[FIG. 2] FIG. 2 is a diagram of a load operation characteristic when using related art.
[FIG. 3] FIG. 3 is a d-q axes vector diagram in related art.
[FIG. 4] FIG. 4 is an m-t axes vector diagram in the first embodiment.
[FIG. 5] FIG. 5 is a diagram of a load operation characteristic in the first embodiment.
[FIG. 6] FIG. 6 is a configuration diagram illustrating a verification method when the first embodiment is employed.
[FIG. 7] FIG. 7 is a configuration diagram of a speed estimation calculation unit in a third embodiment.
[FIG. 8] FIG. 8 is a configuration diagram of a power conversion device in a fourth embodiment.
[FIG. 9] FIG. 9 is a configuration diagram of a power conversion device in a fifth embodiment.
[FIG. 10] FIG. 10 is a configuration diagram of an induction motor driving system in a sixth embodiment.

Description of Embodiments

The embodiments will be described in detail below with reference to the drawings.

First Embodiment

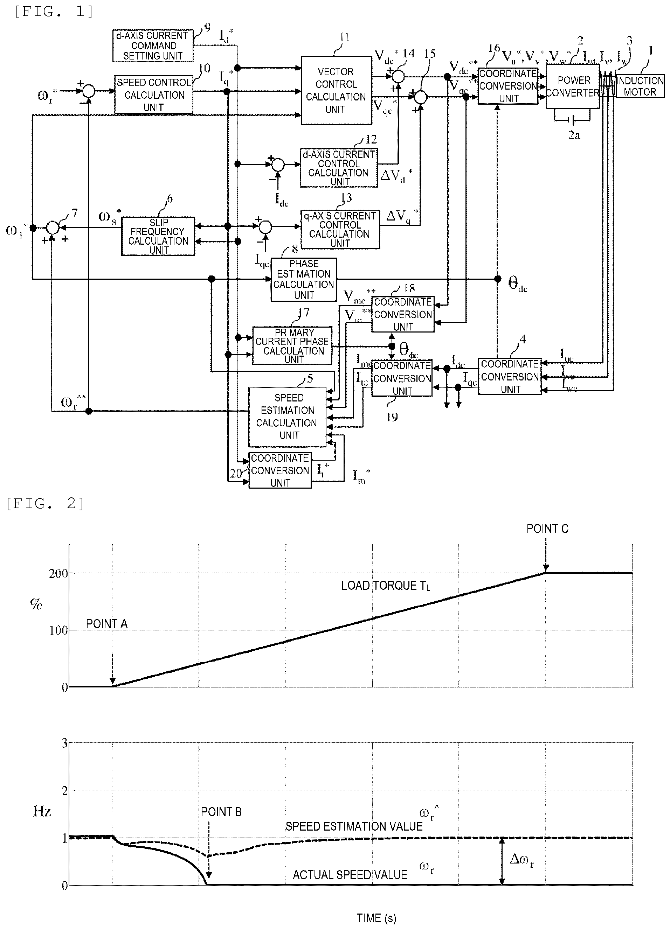

FIG. 1 is a configuration diagram of a power conversion device in the first embodiment. In FIG. 1, an induction motor 1 driven by the power conversion device is configured to generate torque by a magnetic flux generated by a current of a magnetic flux axis component (d-axis) and a current of a torque axis component (q-axis) orthogonal to the magnetic flux axis. A power converter 2 is configured to output a voltage value proportional to three-phase alternating current (AC) voltage command values $V_u{}^*$, $V_v{}^*$, $V_w{}^*$, and to vary an output voltage and an output frequency of the induction motor 1. A direct current (DC) power supply 2a is configured to supply a DC voltage to the power converter 2. A current detector 3 is configured to output detection values $I_{uc}$, $I_{vc}$, and $I_{wc}$ of three-phase AC currents $I_u$, $I_v$, and $I_w$ of the induction motor 1. The current detector 3 may detect phase currents of two phases of the three phases of the induction motor 1, for example, a U-phase and a W-phase, and a line current of a V-phase is obtained as $I_v = - (I_u + I_w)$ from an AC condition ($I_u + I_v + I_w = 0$). A coordinate conversion unit 4 is configured to output current detection values $I_{dc}$ and $I_{qc}$ of the d-axis and the q-axis from the detection values $I_{uc}$, $I_{vc}$, and $I_{wc}$ of the three-phase AC currents $I_u$, $I_v$ and $I_w$ and a phase estimation value $\theta_{dc}$.

A speed estimation calculation unit 5 is configured to output a speed estimation value $\omega_r{}^\wedge$ of the induction motor 1 on the basis of current command values $I_m{}^*$, $I_t{}^*$, current detection values $I_{mc}$, $I_{tc}$, and voltage command values $V_{mc}{}^{**}$, $V_{tc}{}^{**}$ of an m-axis and a t-axis, an output frequency value $\omega_1{}^*$ and circuit constants of the induction motor 1 ($R_1$, $R_2{}'$, M, $L_2$, $\varphi_{2d}{}^*$).

A slip frequency calculation unit 6 is configured to output a slip frequency command value $\omega_s{}^*$ of the induction motor 1 on the basis of current command values $I_d{}^*$ and $I_q{}^*$ of the d-axis and the q-axis and a secondary time constant $T_2$ calculated from the circuit constants of the induction motor 1. An addition unit 7 is configured to output an output frequency value $\omega_1{}^*$, which is an addition value of the speed estimation value $\omega_r{}^\wedge$ and the slip frequency command value $w_s{}^*$.

A phase estimation calculation unit 8 is configured to integrate and calculate the output frequency value $\omega_1{}^*$ and to output the phase estimation value $\theta_{dc}$.

A d-axis current command setting unit 9 is configured to output a d-axis current command value $I_d{}^*$ having a positive polarity. In a constant torque region, the d-axis current command value $I_d{}^*$ is set or controlled to a constant value. In the constant output region, $I_d{}^*$ is variably set or controlled with respect to the torque and a rotating speed.

A speed control calculation unit 10 is configured to output a q-axis current command value $I_q{}^*$ from a deviation $(\omega_r{}^* - \omega_r{}^{\wedge\wedge})$ between the speed command value $\omega_r{}^*$ and a speed estimation value $\omega r^{\wedge\wedge}$.

A vector control calculation unit 11 is configured to output voltage reference values $V_{dc}{}^*$ and $V_{qc}{}^*$ of the d-axis and the q-axis on the basis of the circuit constants of the induction motor 1 ($R_1$, $L_\sigma$, M, $L_2$) and the current command values $I_d{}^*$, $I_q{}^*$, and the output frequency value $\omega_1{}^*$.

A d-axis current control calculation unit 12 is configured to output a d-axis voltage correction value $\Delta V_d{}^*$ from a deviation ($I_d{}^* - I_{dc}$) between the d-axis current command value $I_d{}^*$ and the current detection value $I_{dc}$.

A q-axis current control calculation unit 13 is configured to output a q-axis voltage correction value $\Delta V_q{}^*$ from a deviation ($I_q{}^* - I_{qc}$) between the q-axis current command value $I_q{}^*$ and the current detection value $I_{qc}$.

An addition unit 14 is configured to output a voltage command value $V_{dc}{}^{**}$, which is an addition value of the d-axis voltage reference value $V_{dc}{}^*$ and the d-axis voltage correction value $\Delta V_d{}^*$. An addition unit 15 is configured to output a voltage command value $V_{qc}{}^{**}$, which is an addition value of the q-axis voltage reference value $V_{qc}{}^*$ and the q-axis voltage correction value $\Delta V_q{}^*$.

A coordinate conversion unit 16 is configured to output three-phase AC voltage command values $V_u{}^*$, $V_v{}^*$, and $V_w{}^*$ from the voltage command values $V_{dc}{}^{**}$, $V_{qc}{}^{**}$ and the phase estimation value $\theta_{dc}$.

A primary current phase calculation unit 17 is configured to output a phase angle $\theta_{\varphi c}$ from the d-axis to the m-axis from the current command values $I_d{}^*$ and $I_q{}^*$.

A coordinate conversion unit 18 is configured to output the voltage command values $V_{mc}{}^{**}$ and $V_{tc}{}^{**}$ on the m-t axes from the voltage command values $V_{dc}{}^{**}$ and $V_{qc}{}^{**}$ and the phase angle $\theta_{\varphi c}$.

A coordinate conversion unit 19 is configured to output current detection values $I_{mc}$ and $I_{tc}$ on the m-t axes from the current detection values $I_{dc}$ and $I_{qc}$ of the d-axis and the q-axis.

A coordinate conversion unit 20 is configured to output the current command values $I_m{}^*$ and $I_t{}^*$ on the m-t axes from the d-axis current command value $I_d{}^*$ and the q-axis current command value $I_q{}^*$.

First, basic operations of the speed sensorless control method when the primary current phase calculation unit 17 and the coordinate conversion units 18 to 20 which are the characteristics of the first embodiment are not used will be described.

The d-axis current command setting unit 9 outputs a current command value $I_d{}^*$ necessary for generating a d-axis secondary magnetic flux value ($\varphi_{2d}$ in the induction motor 1. Further, in the speed control calculation unit 10, the q-axis current command value $I_q{}^*$ is calculated according to Formula (2) so that the speed estimation value $\omega_r{}^{\wedge\wedge}$ coincides with the speed command value $w_r{}^*$.

$$I_q{}^* = \left(Kp_{ASR} + \frac{Ki_{ASR}}{s}\right)\left(\omega r^* - \omega r^{\wedge\wedge}\right)$$

(Formula 2)

Here, $Kp_{ASR}$ represents speed control proportional gain, and $Ki_{ASR}$ represents speed control integral gain.

The vector control calculation unit 11 calculates the voltage reference values $V_{dc}{}^*$ and $V_{qc}{}^*$ according to Formula (3) using the current command values $I_d{}^*$ and $I_q{}^*$ of the d-axis and the q-axis, the circuit constants of the induction motor 1 ($R_1$, $L_\sigma$, M, $L_2$), a d-axis secondary flux command value ($\varphi_{2d}{}^*$, and the output frequency value $\omega_1{}^*$.

$$\left[\begin{array}{l} V_{dc}{}^* = R_1{}^* I_d{}^* - \omega_1{}^* \cdot L_\sigma{}^* \dfrac{1}{1+T_{ACR}s} I_q{}^* \\[3mm] V_{qc}{}^* = R_1{}^* I_q{}^* + \omega_1{}^* \left( L_\sigma{}^* \dfrac{1}{1+T_{ACR}s} Id{}^* + \omega_1{}^* \dfrac{M^*}{L2^*} \phi 2d{}^* \right) \end{array}\right]$$

(Formula 3)

Here, $T_{ACR}$ represents a time constant corresponding to a current control delay.

The d-axis current command value $I_d{}^*$ and the current detection value $I_{dc}$ are input to the d-axis current control calculation unit 12, and the q-axis current command value $I_q{}^*$ and the current detection value $I_{qc}$ are input to the q-axis current control calculation unit 13. Here, according to Formula (4), PI (proportional + integral) control is performed so that the current detection values $I_{dc}$ and $I_{qc}$ of respective components follow the current command values $I_d{}^*$ and $I_q{}^*$, and the voltage correction values $\Delta V_d{}^*$ and $\Delta V_q{}^*$ of the d-axis and the q-axis are output.

$$\left[\begin{array}{l} \Delta V_d{}^* = \left(K_{pdACR} + \dfrac{K_{idACR}}{s}\right)(I_d{}^* - I_{dc}) \\[4mm] \Delta V_q{}^* = \left(K_{pqACR} + \dfrac{K_{iqACR}}{s}\right)(I_q{}^* - I_{qc}) \end{array}\right]$$

(Formula 4)

Here, $K_{pdACR}$ represents d-axis current control proportional gain, $K_{idACR}$ represents d-axis current control integral gain, $K_{pqACR}$ represents q-axis current control proportional gain, and $K_{iqACR}$ represents q-axis current control integral gain.

In addition, in the addition units 14 and 15, according to Formula (5),

$$\left[\begin{array}{l} V_{dc}{}^{**} = V_{dc}{}^* + \Delta V_d{}^* \\[3mm] V_{qc}{}^{**} = V_{qc}{}^* + \Delta V_q{}^* \end{array}\right]$$

(Formula 5)

the voltage command values $V_{dc}{}^{**}$ and $V_{qc}{}^{**}$ are calculated, and the output voltage of the power converter 2 is controlled.

The speed estimation calculation unit 5 estimates the speed of the induction motor 1 is by Formula (1).

In addition, the slip frequency calculation unit 6 calculates the slip frequency command value $\omega_s{}^*$ of the induction motor 1 according to Formula (6).

$$\omega_s{}^* = \frac{1}{T_2{}^* I_d{}^*} \frac{1}{1 + T_{ACR}\, s} I_q{}^*$$

(Formula 6)

Here, $T_2$ represents a secondary time constant value.

Further, according to Formula (7),

$$\omega_1{}^* = \omega_r{}^{\wedge} + \omega_s{}^*$$

(Formula 7)

the addition unit 7 calculates the output frequency value $\omega_1{}^*$ using the speed estimation value $\omega_r{}^{\wedge}$ and the slip frequency command value $w_s{}^*$.

The phase estimation calculation unit 8 calculates a phase $\theta_d$ of the magnetic flux axis of the induction motor 1 according to Formula (8).

$$\theta_{dc} = \frac{1}{s}\omega 1^{*}$$

(Formula 8)

The calculation by sensorless control is executed taking the phase estimation value $\theta_{dc}$ which is an estimation value of the phase $\theta_d$ of the magnetic flux axis as a control reference. The above are the basic operations.

Here, control characteristics when using the primary current phase calculation unit 17 and the coordinate conversion units 18 to 20 which are characteristics of the first embodiment will be described.

FIG. 2 shows load operation characteristics when using Patent Literature 1 which is a related art for speed estimation calculation. Here, setting of the primary resistance value $R_1^*$ used in Formula (1) and Formula (3) is set to 0.5 times R1, the induction motor 1 is operated at 1 Hz in a low speed range, and a ramp-shaped torque $\tau_L$ is given up to 200% from a point A to a point C in the figure. Although an actual speed value $\omega_r$ of the induction motor 1 is lower than the speed estimation value $\omega_r{}^{\wedge}$, and the induction motor 1 is stopped after the point B shown in FIG. 2, it can be seen that the speed estimation value $\omega_r{}^{\wedge}$ is 1 Hz in a steady state, and an estimation error $\Delta\omega_r$ is generated. This is due to a voltage component of $(R_1^* + R_2{}'^*)I_{qc}$ included in the numerator term of Formula (1), and torque shortage may be generated in the low speed operation.

By using the primary current phase calculation unit 17 and the coordinate conversion units 18 to 20 which are characteristics of the first embodiment, the torque shortage can be improved. This will be described below.

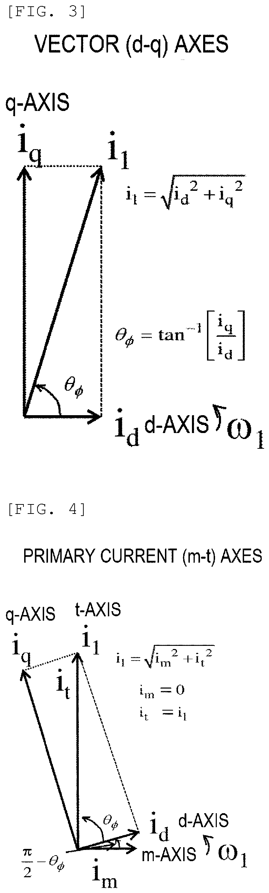

FIG. 3 is a d-q axes vector diagram, which are control axes in the related art. A direction of the magnetic flux is d-axis, and a direction that is 90 degrees (n/2) ahead of the d-axis is q-axis. Here, a d-axis current $I_d$, a q-axis current $I_q$, and a primary current $I_1$ are in a relationship of Formula (9).

$$I_1 = \sqrt{I_d{}^2 + I_q{}^2}$$

(Formula 9)

Further, in Formula (10),

$$\theta_\phi = \tan^{-1}\left(\frac{I_q}{I_d}\right)$$

(Formula 10)

a relationship of a phase angle between $I_d$ and $I_1$ is shown.

FIG. 4 is an m-t axes vector diagram, which are control axes introduced in the first embodiment. A direction of the primary current is the t-axis, and a direction delayed by 90 degrees from the t-axis is the m-axis. Here, an m-axis current $I_m$, a t-axis current $I_t$, and a primary current $I_1$ are in a relationship of Formula (11) .

$$I_1 = \sqrt{I_m{}^2 + I_t{}^2}$$

(Formula 11)

In the primary current phase calculation unit 17 in FIG. 1, the current command values $I_d^*$, $I_q^*$ of the d-axis and the q-axis are input, and according to Formula (12),

$$\theta_{\phi c} = \tan^{-1}\left(\frac{I_q^*}{I_d^*}\right)$$

(Formula 12)

a phase angle $\theta_{\varphi c}$ used for the calculation formulas of the coordinate conversion units 18 to 20 is output.

In the coordinate conversion unit 18, voltage command values $V_{dc}^{**}$ and $V_{qc}^{**}$ of the d-axis and the q-axis and the phase angle $\theta_{\varphi c}$ are input, and according to Formula (13),

$$\begin{bmatrix} V_{mc}^{**} \\ V_{tc}^{**} \end{bmatrix} = \begin{bmatrix} \cos\left(\frac{\pi}{2} - \theta_{\phi c}\right) & -\sin\left(\frac{\pi}{2} - \theta_{\phi c}\right) \\ \sin\left(\frac{\pi}{2} - \theta_{\phi c}\right) & \cos\left(\frac{\pi}{2} - \theta_{\phi c}\right) \end{bmatrix} \begin{bmatrix} V_{dc}^{**} \\ V_{qc}^{**} \end{bmatrix}$$

(Formula 13)

voltage command values $V_{mc}^{**}$ and $V_{tc}^{**}$ of the m-axis and the t-axis are output.

In the coordinate conversion unit 19, the current detection values $I_{dc}$ and $I_{qc}$ of the d-axis and the q-axis and the phase angle $\theta_{\varphi c}$ are input, and according to Formula (14),

$$\begin{bmatrix} i_{mc} \\ i_{tc} \end{bmatrix} = \begin{bmatrix} \cos\left(\frac{\pi}{2} - \theta_{\phi c}\right) & -\sin\left(\frac{\pi}{2} - \theta_{\phi c}\right) \\ \sin\left(\frac{\pi}{2} - \theta_{\phi c}\right) & \cos\left(\frac{\pi}{2} - \theta_{\phi c}\right) \end{bmatrix} \begin{bmatrix} i_{dc} \\ I_{qc} \end{bmatrix}$$

(Formula 14)

the current detection values $I_{mc}$ and $I_{tc}$ of the m-axis and the t-axis are output.

In the coordinate conversion unit 20, the current command values $I_d^*$, $I_q^*$ of the d-axis and the q-axis, and the phase angle $\theta_{\varphi c}$ are input, and according to Formula (15),

$$\begin{bmatrix} i_m^* \\ i_t^* \end{bmatrix} = \begin{bmatrix} \cos\left(\frac{\pi}{2} - \theta_{\phi c}\right) & -\sin\left(\frac{\pi}{2} - \theta_{\phi c}\right) \\ \sin\left(\frac{\pi}{2} - \theta_{\phi c}\right) & \cos\left(\frac{\pi}{2} - \theta_{\phi c}\right) \end{bmatrix} \begin{bmatrix} i_d^* \\ I_q^* \end{bmatrix}$$

(Formula 15)

the current command values $I_m^*$, $I_t^*$ of the m-axis and the t-axis are output.

In the speed estimation calculation unit 5, according to Formula (16), anm-axis back electromotive force value is estimated and divided by the magnetic flux coefficient, and $\omega_r^{\wedge\wedge}$ is output.

$$\omega r^{\wedge\wedge} = \frac{1}{1+T_{obs}S}\left[-\left(\frac{V_{mc}^{**} - \omega 1^* L\sigma^* \frac{1}{1+T_{ACR}S}I_t^* - (R1^* + R2^*) I_{mc} + L\sigma^* s I_{mc}}{\frac{M^*}{L2^*}\phi_{2d}^* \sin\left(\frac{\pi}{2}-\theta_\phi\right)}\right) - \omega s^*\right]$$

(Formula 16)

$(R_1{}^* + R_2{}'^*) I_{mc}$, which is a voltage component included in a numerator term of Formula (16) in the low speed range, is always 0 V by setting $I_{mc} = 0$ even if there is an error in setting $R_1{}^*$, and thus the estimation accuracy of the speed estimation value $\omega_r{}^{\wedge\wedge}$ is improved.

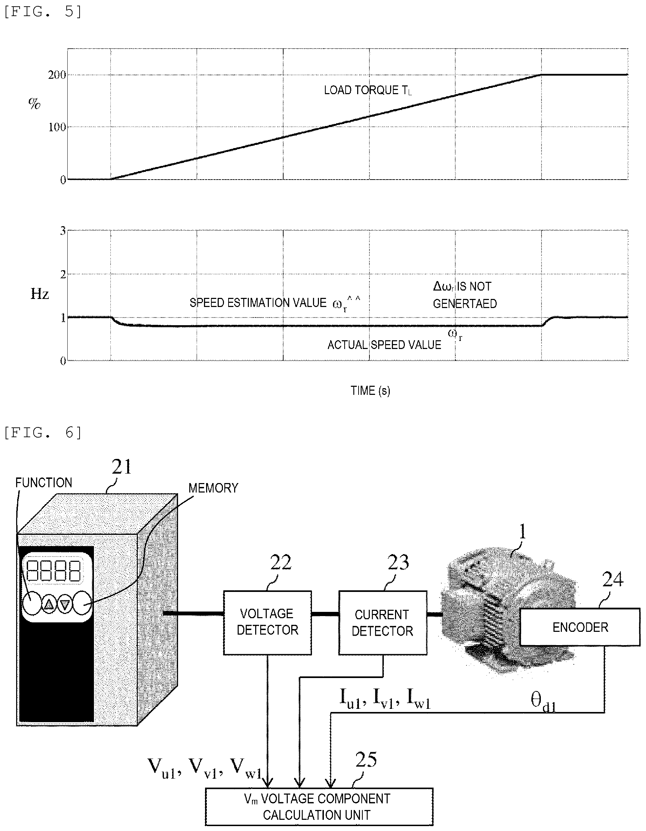

FIG. 5 shows the load operation characteristics in the first embodiment (the conditions used in FIG. 2 are set). By comparing the load characteristics disclosed in FIGS. 2 and 5, the accuracy of the speed estimation value $\omega_r{}^{\wedge\wedge}$ of the induction motor 1 is significantly improved, and the effect thereof is obvious. That is, in a low speed range, sensitivity to the primary resistance value is low, and stable and highly accurate speed control can be obtained.

In addition, an absolute value of the primary frequency $\omega_1{}^*$ may be about 10% or less of a rated frequency of the induction motor 1 in the low speed range described above. Alternatively, a drop voltage related to the primary resistance value and a drop voltage related to the back electromotive force are compared, and it is also possible to set a case where Formula (17)

$$\left|R1^* I_q^*\right| \geqq \left|\omega r^*\left(L\sigma^* Id^* + \frac{M^*}{L2^*}\phi_{2d}^*\right)\right|$$

(Formula 17)

is satisfied as the low speed range.

Here, a verification method when the first embodiment is employed will be described using FIG. 6.

When the control calculation is performed on the m-t axes of the primary current axes, an m-axis voltage command value is expressed by Formula (18).

$$V_m = (R_1 + L_\sigma s)I_m - \omega_1\left[L_\sigma I_t + \frac{M}{L_2}\phi_{2d}\sin\left(\frac{\pi}{2}-\theta_\phi\right)\right]$$

(Formula 18)

In the formula, since the m-axis current $I_m = 0$, the m-axis voltage command value becomes Formula (19).

$$V_m = -\omega_1(L_\sigma I_t + \frac{M}{L_2}\phi_{2t})$$

(Formula 19)

The value of the primary resistance value $R_1$ changes as a length of an electric wire connecting a power conversion device 21 and the induction motor 1 is changed. In the method of the first embodiment, since the sensitivity to the primary resistance value $R_1$ is low, an m-axis voltage value $V_m$ is a constant value.

Therefore, as shown in FIG. 6, a voltage detector 22 and a current detector 23 are attached to the power conversion device 21 that drives the induction motor 1, and an encoder 24 is attached to a shaft of the induction motor 1. A three-phase voltage value ($V_{u1}$, $V_{v1}$, $V_{w1}$), which is an output of the voltage detector 22, a three-phase current value ($I_{u1}$, $I_{v1}$, $I_{w1}$), which is an output of the current detector 23, and a position $\theta_{d1}$, which is an output of the encoder, are input to a $V_m$ voltage component calculation unit 25. The $V_m$ voltage component is calculated based on the input information, and the first embodiment is employed as long as there is no change in an output value of the $V_m$ voltage component calculation unit 25 even if the length of the electric wire described above is changed.

As described above, the first embodiment is a power conversion device for driving an induction motor by speed sensorless vector control, which has a coordinate conversion unit for converting a command value or a detection value to control axes using a primary current direction and a direction delayed by 90 degrees from the primary current direction as a rotating coordinate system; and a speed estimation calculation unit for calculating a speed estimation value of the induction motor on the basis of the command value or the detection value converted by the coordinate conversion unit. The power conversion device controls an output frequency value on the basis of the speed estimation value. That is, the direction of the primary current is set as the t-axis and the direction delayed by 90 degrees therefrom is set as the m-axis, and the speed estimation value is calculated by using the voltage command values and the current detection values on the rotating coordinate system of the m-t axes, and the circuit constants of the induction motor.

In this way, it is possible to provide an induction motor speed estimation method capable of obtaining highly accurate speed control characteristics without torque shortage by lowering sensitivity to the primary resistance value in the low speed range, and a power conversion device using the induction motor speed estimation method.

Second Embodiment

The first embodiment is a method for improving the accuracy of the speed estimation value in the low speed range, in the second embodiment, a method for improving the accuracy of the speed estimation value in a middle-high speed range will be described.

The configuration diagram of the power conversion device in the second embodiment is the same as that shown in FIG. 1 except for the speed estimation calculation unit 5, therefore, the drawing and the description thereof are omitted.

According to Formula (20),

$$\omega_r{}^{\wedge\wedge\wedge} = \frac{1}{1 + T_{obs}S}\left[-\left(\frac{V_{tc}{}^{**} - \omega_1{}^*L_\sigma{}^* \frac{1}{1 + T_{ACR}\,S}I_m{}^* - (R_1{}^* + R_2{}'{}^*)\,I_{tc} + L_\sigma{}^*S\,I_{tc}}{\frac{M^*}{L_2{}^*}\phi_{2d}{}^*\cos\left(\frac{\pi}{2} - \theta_\phi\right)}\right) - \omega_s{}^*\right]$$

(Formula 20)

a speed estimation calculation unit 5' in the second embodiment estimates a t-axis back electromotive force value and outputs $\omega_r{}^{\wedge\wedge\wedge}$ by dividing by a magnetic flux coefficient.

$\omega_1{}^*L_\sigma{}^*I_m{}^*$, which is a voltage component included in a numerator term of Formula (20) in the middle-high speed range, is always 0 V by setting $I_m{}^* = 0$ even if there is an error in setting $L_\sigma{}^*$, and thus the estimation accuracy of the speed estimation value $\omega_r{}^{\wedge\wedge}$ is improved. That is, in the middle-high speed range, sensitivity to the leakage inductance value is low, and highly accurate speed control can be obtained.

In the middle-high speed range described above, an absolute value of the primary frequency $\omega_1{}^*$ may be about 10% or more of a rated rotating speed. Alternatively, a drop voltage related to the primary resistance value and a drop voltage related to the back electromotive force are compared, it is also possible to set a case where Formula (21) is satisfied as the middle-high speed range.

$$\left|R_1{}^*I_q{}^*\right| < \left|\omega_r{}^*\left(L_\sigma{}^*I_d{}^* + \frac{M^*}{L_2{}^*}\phi_{2d}{}^*\right)\right|$$

(Formula 21)

Third Embodiment

The first embodiment is a method for improving the accuracy of the speed estimation value in the low speed range, and in the third embodiment, a method for switching the speed estimation value in the low speed range and the middle-high speed range will be described.

The configuration diagram of the power conversion device in the third embodiment is the same as that shown in FIG. 1 except for the speed estimation calculation unit 5, therefore, the drawing and the description thereof are omitted.

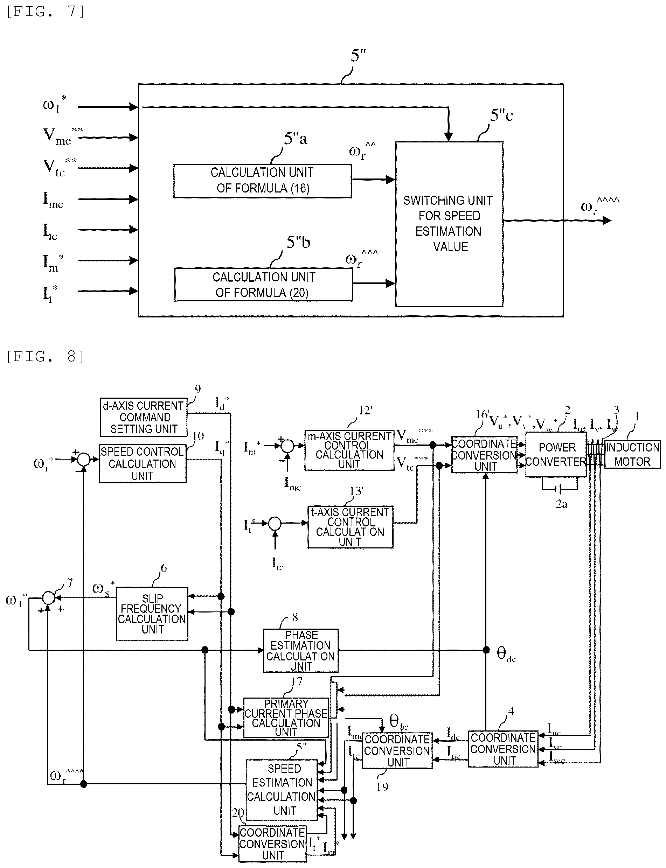

FIG. 7 shows a configuration of a speed estimation calculation unit 5'' in the third embodiment. A speed estimation calculation unit 5''a is a calculation unit of Formula (16) and outputs a speed estimation value $\omega_r{}^{\wedge\wedge}$, and 5''b is a calculation unit of Formula (20) and outputs a speed estimation value $\omega_r{}^{\wedge\wedge\wedge}$. 5''c is a switching unit for the speed estimation value, which selects the speed estimation value $\omega_r{}^{\wedge\wedge}$ in the low speed range and selects the speed estimation value $\omega_r{}^{\wedge\wedge\wedge}$ in the middle-high speed range, and outputs either one of them as $\omega_r{}^{\wedge\wedge\wedge\wedge}$.

Further, for the low speed range and the middle-high speed range described above, the low speed range may be set when an absolute value of the primary frequency $\omega_1{}^*$ is about 10% or less of a rated rotating speed, and the middle-high speed range may be set when the absolute value of the primary frequency $\omega_1{}^*$ is about 10% or more of the rated rotating speed. Alternatively, a drop voltage related to the primary resistance value and a drop voltage related to the back electromotive force are compared, it is also possible to set the case where Formula (17) is satisfied as the low speed range and the case where Formula (21) is satisfied as the middle-high speed range.

As in the third embodiment, by switching the speed estimation value in the low speed range and the high speed range, highly accurate speed control in the entire speed range can be obtained.

Fourth Embodiment

In the first embodiment, only the speed estimation calculation unit is calculated on the m-t axes. However, in the fourth embodiment, a method in which the current control calculation units of d-axis and q-axis are also calculated on the m-t axes will be described.

FIG. 8 is a configuration diagram of the power conversion device in the fourth embodiment. Since 1 to 4, 6 to 10, 17, 19, and 20 in FIG. 8 are the same as those in FIG. 1, descriptions thereof will be omitted.

In FIG. 8, an m-axis current control calculation unit 12' outputs an m-axis voltage command value $V_{mc}{}^{***}$ from a deviation ($I_m{}^* - I_{mc}$) between the m-axis current command value $I_m{}^*$ and the current detection value $I_{mc}$. A t-axis current control calculation unit 13' outputs a t-axis voltage command value $V_{tc}{}^{***}$ from a deviation ($I_t{}^* - I_{tc}$) between the t-axis current command value $I_t{}^*$ and the current detection value $I_{tc}$.

Here, according to Formula (22), PI (proportional + integral) control is performed so that the current detection values $I_{mc}$ and $I_{tc}$ of the respective components follow the current command values $I_m{}^*$ and $I_t{}^*$, and the voltage command values $V_{mc}{}^{***}$ and $V_{tc}{}^{***}$ of the m-axis and the t-axis are output.

$$\left[ \begin{array}{l} V_{mc}{}^{***} = (K_{pmACR1} + \dfrac{K_{imACR1}}{S})(Im^* - Imc) \\[3mm] V_{tc}{}^{***} = (K_{ptACR1} + \dfrac{K_{itACR1}}{S})(It^* - Itc) \end{array} \right] \qquad \text{(Formula 22)}$$

Here, $K_{pmACR}$ represents the m-axis current control proportional gain, $K_{imACR}$ represents the m-axis current control integral gain, $K_{ptACR}$ represents the t-axis current control proportional gain, and $K_{itACR}$ represents the t-axis current control integral gain.

A coordinate conversion unit 16' outputs a three-phase AC voltage command values $V_u{}^*$, $V_v{}^*$, $V_w{}^*$ from the voltage command values $V_{mc}{}^{***}$, $V_{tc}{}^{***}$, and the phase estimation value $\theta_{dc}$.

As in the fourth embodiment, current control may be calculated on the m-t axis, and high response current control characteristics can be obtained with low sensitivity to the primary resistance value.

Fifth Embodiment

In the first to fourth embodiments, in the speed estimation calculation units 5, 5', 5'', one level value was set to determine the low speed range and the meddle-high speed range. However, in the fifth embodiment, a case of setting two level values for determination will be described.

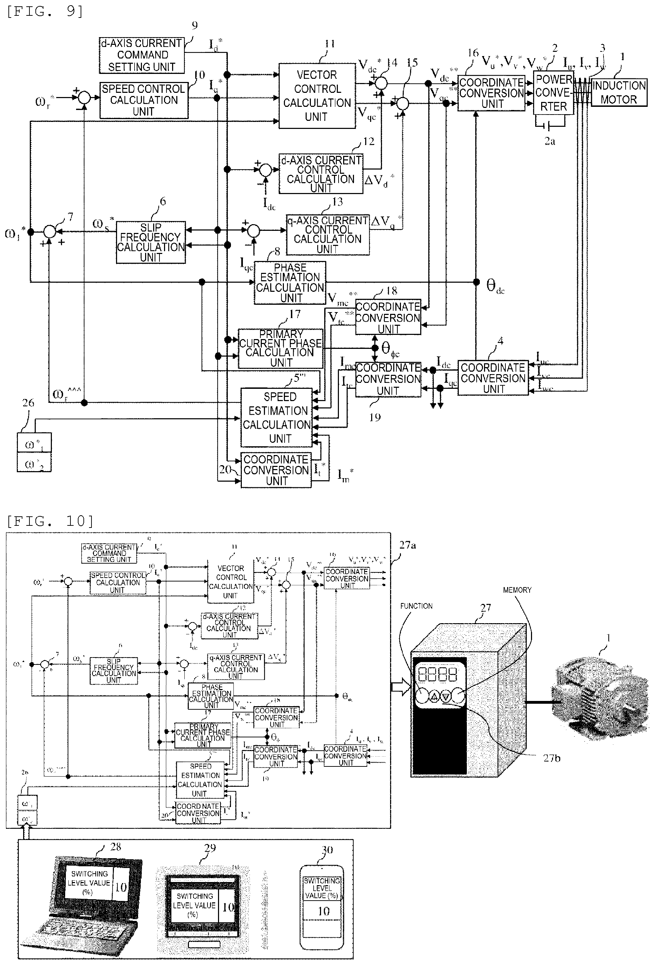

FIG. 9 is a configuration diagram of a power converter in the fifth embodiment. The configuration shown in FIG. 9 is the same as that shown in FIG. 1 except for the speed estimation calculation unit 5 and 26, and therefore, the description thereof is omitted.

26 is a level value for determining a low speed range and a middle-high speed range, with two ($\omega^*_1$, $\omega^*_2$) being set.

For example, 5% of the rated frequency is set to $\omega^*_1$, and 10% of the rated frequency is set to $\omega^*_2$. Then, in a

speed estimation calculation unit 5‴, firstly, the level value for determination is set to the first $\omega^*_1$ and actual operation is performed. As a result, when torque shortage or overcurrent trip is generated, the level value for determination is changed to the second $\omega^*_2$ at a next calculation timing. With this configuration, it is possible to optimally set the level value for determination.

Further, although two level values for determination are set in the fifth embodiment, a plurality of level values for determination may be prepared. In this way, by providing a plurality of level values for determination, highly accurate speed control can be obtained even in an induction motor having a large primary resistance value and a large influence of the variation.

Sixth Embodiment

In the sixth embodiment, an example in which the fifth embodiment is applied to an induction motor driving system will be described.

FIG. 10 is a configuration diagram of an induction motor driving system in the sixth embodiment. In FIG. 10, 27a constituted by the components 1, 4, 5‴, 6 to 20, and 26 is the same as that of FIG. 9.

In FIG. 10, the induction motor 1 is driven by the power conversion device 27. Further, in the power conversion device 27, the components 1, 4, 5‴, 6 to 20, and 26 are implemented as software as 27a, and a digital operator 27b is implemented as hardware.

The level value 26 for determining the low speed range and the middle-high speed range may be set by a host device such as the digital operator 27b of the power conversion device 27, a personal computer 28, a tablet 29, and a smartphone 30. Further, by using a circuit constant, a rated frequency, and a rated current value of the induction motor set in an internal memory of a microcomputer mounted in the power conversion device including a power converter, the setting may be performed automatically.

When the sixth embodiment is applied to an induction motor driving system, highly accurate speed control characteristics can be obtained in the entire speed range.

Note that, in the sixth embodiment, although an example in which the fifth embodiment is applied has been described, the first to fourth embodiments may also be applied.

Further, in the first to third embodiments, the voltage correction values $\Delta V_d^*$ and $\Delta V_q^*$ are generated based on the current command values $I_d^*$ and $I_q^*$ and the current detection values $I_{dc}$ and $I_{qc}$, and the calculation is performed according to Formula (3) by adding the voltage correction value and the voltage reference value of the vector control. The vector control method may be performed in which intermediate current command values $I_d^{**}$ and $I_q^{**}$ shown in Formula (23) used for vector control calculation are generated based on the current command values $I_d^*$ and $I_q^*$ and the current detection values $I_{dc}$ and $I_{qc}$,

$$\left[ \begin{array}{l} I_d^{**} = \left( K_{pdACR1} + \dfrac{K_{idACR1}}{S} \right)(I_d^* - I_{dc}) \\[4mm] I_q^{**} = \left( K_{pqACR1} + \dfrac{K_{iqACR1}}{S} \right)(I_q^* - I_{qc}) \end{array} \right] \qquad \text{(Formula 23)}$$

and the voltage command values $V_{dc}^{***}$ and $V_{qc}^{***}$ are calculated according to Formula (24) by using the current command value, the output frequency value $\omega_1^*$, and the circuit constants of the induction motor 1.

$$\left[ \begin{array}{l} V_{dc}{}^{***} = R_1{}^* I_d{}^{**} - \omega_1{}^* L\sigma{}^* \dfrac{1}{1+T_d s} I_q{}^{**} \\ \\ V_{qc}{}^{***} = R_1{}^* \cdot I_q{}^{**} + \omega_1{}^* L\sigma{}^* \dfrac{1}{1+T_q s} I_q{}^{**} + \omega_1{}^* \dfrac{M^*}{L_2{}^*} \phi_{2d}{}^* \end{array} \right]$$

(Formula 24)

Here, $K_{pdACR1}$ represents the d-axis current control proportional gain, $K_{idACR1}$ represents the d-axis current control integral gain, $K_{pqACR1}$ represents the q-axis current control integral gain, $K_{iqACR1}$ represents the q-axis current control integral gain, $T_d$ represents d-axis electric time constant ($L_d/R$), and $T_q$ represents q-axis electric time constant ($L_q/R$).

Further, the vector control method may also be performed in which based on the current detection values $I_{dc}$ and $I_{qc}$, and the current command values $I_d{}^*$ and $I_q{}^*$, a voltage correction value $\Delta V_{d\_p}{}^*$ of a d-axis proportional calculation component, a voltage correction value $\Delta V_{d\_i}{}^*$ of a d-axis integral calculation component, a voltage correction value $\Delta V_{q\_p}{}^*$ of a q-axis proportional calculation component, and a voltage correction value $\Delta V_{q\_i}{}^*$ of a q-axis integral calculation component, which are used for vector control calculation are calculated according to Formula (25),

$$\left[ \begin{array}{l} \Delta V_{d\_p}{}^* = K_{pdACR}(I_d{}^* - I_{dc}) \\ \\ \Delta V_{d\_i}{}^* = \dfrac{K_{idACR}}{s}(I_d{}^* - I_{dc}) \\ \\ \Delta V_{q\_p}{}^* = K_{pqACR}(I_q{}^* - I_{qc}) \\ \\ \Delta V_{q\_i}{}^* = \dfrac{K_{iqACR}}{s}(I_q{}^* - I_{qc}) \end{array} \right]$$

(Formula 25)

and by using these voltage correction values, the output frequency values $\omega_1{}^*$, and the circuit constants of the induction motor 1, according to Formula (26),

$$\left[ \begin{array}{l} V_{dc}{}^{****} = (\Delta V_{d\_p}{}^* + \Delta V_{d\_i}{}^*) - \omega_1{}^* \dfrac{L_\sigma{}^*}{R_1{}^*} \Delta V_{q\_i}{}^* \\ \\ V_{dc}{}^{****} = (\Delta V_{q\_p}{}^* + \Delta V_{q\_i}{}^*) + \omega_1{}^* \dfrac{L_\sigma{}^*}{R_1{}^*} \Delta V_{d\_i}{}^* + \omega_1{}^* \dfrac{M^*}{L_2{}^*} \phi_{2d}{}^* \end{array} \right]$$

(Formula 26)

the voltage command values $V_{dc}{}^{****}$ and $V_{qc}{}^{****}$ are calculated.

Further, in the first to sixth embodiments, the speed estimation calculation unit calculates the speed estimation value. However, a method in which current control and speed estimation are used in combination in q-axis current control may be used. That is, as shown in Formula (27), the speed estimation value $\omega_r\text{^^^^^}$ is calculated.

$$\omega_r{}^{\wedge\wedge\wedge\wedge*} = \left(K_{pqACR2} + \frac{K_{iqACR2}}{s}\right)(I_q{}^* - I_{qc})$$

(Formula 27)

Here, $K_{pqACR2}$ represents current control proportional gain, and $K_{iqACR2}$ represents current control integral gain.

Further, in the fourth embodiment, the outputs of the current control calculation unit of the m-t axes are output as $V_{mc}{}^{***}$ and $V_{tc}{}^{***}$ according to Formula (22). However, voltage correction values $\Delta V_m{}^*$ and $\Delta V_t{}^*$ are generated based on the current command values $I_m{}^*$ and $I_m{}^*$ and the current detection values $I_{mc}$ and $I_{mc}$ according to Formula (28), and the voltage correction values and the voltage reference value of vector control are added according to Formula (29),

$$\left[\begin{array}{l} \Delta V_m{}^* = \left(K_{pmACR1} + \dfrac{K_{imACR1}}{s}\right)(I_m{}^* - I_{mc}) \\[3mm] \Delta V_t{}^* = \left(K_{ptACR1} + \dfrac{K_{itACR1}}{s}\right)(I_t{}^* - I_{tc}) \end{array}\right]$$

(Formula 28)

$$\left[\begin{array}{l} V_m{}^{****} = R_1{}^* I_m{}^* - \omega_1{}^* L_\sigma{}^* \dfrac{1}{1+T_{ACR}s} I_t{}^* - \omega_1{}^* \dfrac{M^*}{L_2{}^*}\phi_{2m}{}^* \sin\left(\dfrac{\pi}{2}-\theta_\phi\right) + \Delta V_m{}^* \\[4mm] V_t{}^{****} = R_1{}^* I_t{}^* + \omega_1{}^* L_\sigma{}^* \dfrac{1}{1+T_{ACR}s} I_m{}^* + \omega_1{}^* \dfrac{M^*}{L_2{}^*}\phi_{2m}{}^* \cos\left(\dfrac{\pi}{2}-\theta_\phi\right) + \Delta V_t{}^* \end{array}\right]$$

(Formula 29)

so as to perform the vector control method.

In addition, in the fourth embodiment, although the speed estimation value is calculated in the speed estimation calculation unit 5", a method in which the current control and the speed estimation are used in combination in the t-axis current control may be used. That is, the speed estimation value $\omega_r{}^{\wedge\wedge\wedge\wedge\wedge\wedge}$ is calculated according to Formula (30).

$$\omega_r{}^{\wedge\wedge\wedge\wedge\wedge\wedge} = \left(K_{ptACR2} + \frac{K_{itACR2}}{s}\right)(I_t{}^* - I_{tc})$$

(Formula 30)

Here, $K_{ptACR2}$ represents current control proportional gain, and $K_{itACR2}$ represents current control integral gain.

Further, in the first to sixth embodiment, the speed estimation value may be calculated on the m-t axes in the low speed range and on the conventional d-q axes in the middle-high speed range.

Note that, in the first to sixth embodiment, the switching element constituting the power converter 2 may be a silicon (Si) semiconductor element, or may be a wide band gap semiconductor element such as silicon carbide (SiC) or gallium nitride (GaN).

Reference Sign List

| | |
|---|---|
| 1 | induction motor |
| 2 | power converter |
| 2a | DC power supply |
| 3 | current detector |
| 4, 16, 18, 19, 20 | coordinate conversion unit |
| 5 | speed estimation calculation unit |
| 6 | slip frequency calculation unit |
| 7 | addition unit |
| 8 | phase estimation calculation unit |
| 9 | d-axis current command setting unit |
| 10 | speed control calculation unit |
| 11 | vector control calculation unit |
| 12 | d-axis current control calculation unit |
| 13 | q-axis current control calculation unit |
| 14, 15 | addition unit |
| 17 | primary current phase calculation unit |
| 21 | power conversion device |
| 22 | voltage detector |
| 23 | current detector |
| 24 | encoder |
| 25 | $V_m$ voltage component calculation unit |
| 26 | level value |
| 27 | power conversion device |
| 27a | soft processing |
| 27b | digital operator |
| $I_d^*$ | d-axis current command value |
| $I_q^*$ | q-axis current command value |
| $I_{dc}$ | d-axis current detection value |
| $I_q^*$ | q-axis current detection value |
| $I_m^*$ | m-axis current command value |
| $I_t^*$ | t-axis current command value |
| $I_{mc}$ | m-axis current detection value |
| $I_{tc}$ | t-axis current detection value |
| $\omega_r^*$ | speed command value |
| $\omega_r$ | speed of induction motor 1 |
| $(\omega_r^\wedge, \omega_r^{\wedge\wedge}, (\omega_r^{\wedge\wedge\wedge}, \omega_r^{\wedge\wedge\wedge\wedge}, \omega_r^{\wedge\wedge\wedge\wedge\wedge}, \omega_r^{\wedge\wedge\wedge\wedge\wedge\wedge}$ | speed estimation value |
| $\omega_s^*$ | slip frequency command value |
| $\omega_1^*$ | output frequency value or speed command value of induction |
| motor | 1 |
| $\theta_{dc}$ | phase estimation value |
| $\theta_\varphi,$ | $\theta_{\varphi c}$ phase angle |
| $V_{dc}^*$ | d-axis voltage command reference value |
| $V_{qc}^*$ | q-axis voltage command reference value |
| $V_{dc}^{**}, V_{dc}^{***}, V_{dc}^{****}, V_{dc}^{*****}$ | d-axis voltage command value |
| $V_{qc}^{**}, V_{qc}^{***}, V_{qc}^{****}, V_{qc}^{*****}$ | q-axis voltage command value |
| $V_{mc}^{**}, V_{mc}^{***}, V_{mc}^{****}$ | m-axis voltage command value |
| $V_{tc}^{**}, V_{tc}^{***}, V_{tc}^{****}$ | t-axis voltage command value |

## Claims

1. A power conversion device (21, 27) that drives an induction motor (1) by speed sensorless vector control, comprising:

   a coordinate conversion unit (18, 19, 20) configured to convert a command value ($V_{dc}^{**}$; $V_{qc}^{**}$) or a detection value ($I_{dc}$; $I_{qc}$) to control axes using a primary current direction ($V_{tc}^{**}$; $I_{tc}$) and a direction ($V_{mc}^{**}$; $I_{mc}$) delayed by 90 degrees from the primary current direction as a rotating coordinate system; and
   a speed estimation calculation unit (5) configured to calculate a speed estimation value ($\omega_r^{\wedge\wedge}$) of the induction motor (1) on the basis of the command value or the detection value converted by the coordinate conversion unit (18, 19, 20), wherein
an output frequency value is controlled on the basis of the speed estimation value.

2. The power conversion device (21, 27) according to claim 1, further comprising:
a vector control calculation unit (11) configured to perform vector control calculation on the basis of the command value or the detection value converted by the coordinate conversion unit (18, 19, 20).

3. The power conversion device (21, 27) according to claim 1 or 2, wherein
the coordinate conversion unit (18, 19, 20) is configured to calculate current command values or current detection values and voltage command values of a t-axis which is the primary current direction and of a m-axis which is a direction delayed by 90 degrees from the t-axis by using a sine signal and a cosine signal of a subtraction value obtained by dividing a q-axis current command value or current detection value of the induction motor (1) by a d-axis current command value or current detection value and subtracting an inverse tangent signal of the divided value from 90 degrees, and the current command values or current detection values and voltage command values of the d-axis and the q-axis.

4. The power conversion device (21, 27) according to claim 3, wherein
a t-axis current command value or current detection value is a square root of an addition value of a value obtained by squaring the d-axis current command value or current detection value and a value obtained by squaring the q-axis current command value or current detection value, and the m-axis current command value or current detection value is zero.

5. The power conversion device (21, 27) according to claim 3 or 4, wherein
the speed estimation calculation unit (5) is configured to calculate the speed estimation value of the induction motor (1) by using the m-axis voltage command value, the current command values and current detection values of the m-axis and the t-axis, a sine signal, a circuit constant of the induction motor (1), the output frequency value, and a slip frequency command value in a low speed range in which an absolute value of a value obtained by multiplying an addition value, which is obtained by adding a value obtained by multiplying a leakage inductance value of the induction motor (1) by a d-axis current and a value obtained by dividing a mutual inductance by a secondary inductance and multiplying by a d-axis secondary flux, by the output frequency value or a speed command value, is smaller than an absolute value of a value obtained by multiplying a primary resistance value by a q-axis current.

6. The power conversion device (21, 27) according to claim 3 or 4, wherein
the speed estimation calculation unit (5) is configured to calculate the speed estimation value of the induction motor (1) by using the t-axis voltage command value, the current command values and current detection values of the m-axis and the t-axis, a cosine signal, a circuit constant of the induction motor (1), the output frequency value, and a slip frequency command value in a middle-high speed range in which an absolute value of a value obtained by multiplying an addition value, which is obtained by adding a value obtained by multiplying a leakage inductance value of the induction motor (1) by a d-axis current and a value obtained by dividing a mutual inductance by a secondary inductance and multiplying by a d-axis secondary flux, by the output frequency value or a speed command value, is larger than an absolute value of a value obtained by multiplying a primary resistance value by a q-axis current.

7. The power conversion device (21, 27) according to claim 3 or 4, wherein
the speed estimation calculation unit (5) is configured to switch the speed estimation value of the induction motor (1) between a low speed range in which an absolute value 1 of a value obtained by multiplying an addition value, which is obtained by adding a value obtained by multiplying a leakage inductance value of the induction motor (1) by a d-axis current and a value obtained by dividing a mutual inductance by a secondary inductance and multiplying by a d-axis secondary flux, by the output frequency value or a speed command value, is smaller than an absolute value 2 of a value obtained by multiplying a primary resistance value by a q-axis current, and a middle-high speed range in which the absolute value 1 is larger than the absolute value 2.

8. The power conversion device (21, 27) according to claim 7, wherein
a level value that switches between the low speed range and the middle-high speed range is automatically set by using a circuit constant of the induction motor (1) and a rated frequency and a rated current value set in internal memory.

9. The power conversion device (21, 27) according to claim 7, wherein
a switching threshold of the low speed range and the middle-high speed range can be set and changed by connecting a digital operator (27b) or a personal computer (28) or tablet (29) or a smartphone (30) device.

10. A speed estimation method for speed sensorless vector control of an induction motor (1), the speed estimation method comprising:

converting, using a coordinate conversion unit (18, 19, 20), a command value ($V_{dc}$**; $V_{qc}$**) or a detection value ($I_{dc}$; $I_{qc}$) to control axes using a primary current direction ($V_{tc}$**; $I_{tc}$) and a direction ($V_{mc}$**; $I_{mc}$) delayed by 90 degrees from the primary current direction as a rotating coordinate system; and

calculating, using a speed estimation calculation unit (5), a speed estimation value ($\omega_r$^^) of the induction motor (1) on the basis of the command value or the detection value converted by the coordinate conversion unit (18, 19, 20).

11. The speed estimation method according to claim 10, wherein:
converting the command value or the detection value to the control axes comprises calculating current command values or current detection values and voltage command values of a t-axis which is a primary current direction and a m-axis which is a direction delayed by 90 degrees from the t-axis by using a sine signal and a cosine signal of a subtraction value obtained by dividing a q-axis current command value or current detection value of the induction motor (1) by a d-axis current command value or current detection value and subtracting an inverse tangent signal of the divided value from 90 degrees, and the current command values or current detection values and voltage command values of the d-axis and the q-axis.

12. The speed estimation method according to claim 11, wherein
a t-axis current command value or current detection value is a square root of an addition value of a value obtained by squaring the d-axis current command value or current detection value and a value obtained by squaring the q-axis current command value or current detection value, and the m-axis current command value or current detection value is zero.

13. The speed estimation method according to claim 11 or 12, wherein
the speed estimation value is calculated by using the m-axis voltage command value, the current command values and current detection values of the m-axis and the t-axis, a sine signal, a circuit constant of the induction motor (1), the output frequency value, and a slip frequency command value in a low speed range in which an absolute value of a value obtained by multiplying an addition value, which is obtained by adding a value obtained by multiplying a leakage inductance value of the induction motor (1) by a d-axis current and a value obtained by dividing a mutual inductance by a secondary inductance and multiplying by a d-axis secondary flux, by the output frequency value or a speed command value, is smaller than an absolute value of a value obtained by multiplying a primary resistance value by a q-axis current.

14. The speed estimation method according to claim 11 or 12, wherein
the speed estimation value is calculated by using the t-axis voltage command value, the current command values and current detection values of the m-axis and the t-axis, a cosine signal, a circuit constant of the induction motor (1), the output frequency value, and a slip frequency command value in a middle-high speed range in which an absolute value of a value obtained by multiplying an addition value, which is obtained by adding a value obtained by multiplying a leakage inductance value of the induction motor (1) by a d-axis current and a value obtained by dividing a mutual inductance by a secondary inductance and multiplying by a d-axis secondary flux, by the output frequency value or a speed command value, is larger than an absolute value of a value obtained by multiplying a primary resistance value by a q-axis current.

15. The speed estimation method according to claim 11 or 12, wherein
the speed estimation value is switched between a low speed range in which an absolute value 1 of a value obtained by multiplying an addition value, which is obtained by adding a value obtained by multiplying a leakage inductance value of the induction motor (1) by a d-axis current and a value obtained by dividing a mutual inductance by a secondary inductance and multiplying by a d-axis secondary flux, by the output frequency value or a speed command value, is smaller than an absolute value 2 of a value obtained by multiplying a primary resistance value by a q-axis current, and a middle-high speed range in which the absolute value 1 is larger than the absolute value 2.

**Patentansprüche**

1. Leistungswandlervorrichtung (21, 27), die einen Induktionsmotor (1) durch sensorlose Drehzahlvektorsteuerung antreibt und Folgendes umfasst:

   eine Koordinatenwandlereinheit (18, 19, 20), die ausgelegt ist, um einen Befehlswert ($V_{dc}{}^{**}$; $V_{qc}''$) oder einen Detektionswert ($I_{dc}$; $I_{qc}$) unter Verwendung einer Hauptstromrichtung ($V_{tc}{}^{**}$; $I_{tc}$) und einer Richtung ($V_{mc}{}^{**}$; $I_{mc}$), die um 90 Grad von der Hauptstromrichtung verzögert ist, als ein rotierendes Koordinatensystem in Steuerachsen umzuwandeln;
   eine Drehzahlschätzungsberechnungseinheit (5), die ausgelegt ist, um einen Drehzahlschätzungswert ($\omega_r{}^{\wedge\wedge}$) des Induktionsmotors (1) basierend auf dem durch die Koordinatenwandlereinheit (18, 19, 20) umgewandelten Befehlswert oder dem Detektionswert zu berechnen, wobei
   ein Ausgangsfrequenzwert basierend auf dem Drehzahlschätzungswert gesteuert wird.

2. Leistungswandlervorrichtung (21, 27) nach Anspruch 1, die ferner Folgendes umfasst:
   eine Vektorsteuerungsberechnungseinheit (11), die ausgelegt ist, um eine Vektorsteuerungsberechnung basierend auf dem durch die Koordinatenwandlereinheit (18, 19, 20) umgewandelten Befehlswert oder dem Detektionswert zu berechnen.

3. Leistungswandlervorrichtung (21, 27) nach Anspruch 1 oder 2, wobei
   die Koordinatenwandlereinheit (18, 19, 20) ausgelegt ist, um Strombefehlswerte oder Stromdetektionswerte und Spannungsbefehlswerte einer t-Achse, die die Hauptstromrichtung ist, und einer m-Achse, die eine Richtung ist, die um 90 Grad von der t-Achse verzögert ist, unter Verwendung eines Sinus-Signals und eines Cosinus-Signals eines Subtraktionswerts, der durch Dividieren eines Strombefehlswerts oder eines Stromdetektionswerts einer q-Achse des Induktionsmotors (1) durch einen Strombefehlswert oder des Stromdetektionswerts einer d-Achse und Subtrahieren eines inversen Tangens-Signals des dividierten Werts von 90 Grad erhalten wird, und die Strombefehlswerte oder Stromdetektionswerte und Spannungsbefehlswerte der d-Achse und der q-Achse zu berechnen.

4. Leistungswandlervorrichtung (21, 27) nach Anspruch 3, wobei
   ein Strombefehlswert oder ein Stromdetektionswert einer t-Achse eine Quadratwurzel eines Additionswerts eines Werts, der durch Quadrieren des Strombefehlswerts oder des Stromdetektionswerts der d-Achse erhalten wird, und eines Werts ist, der durch Quadrieren des Strombefehlswerts oder des Stromdetektionswerts der q-Achse erhalten wird, und wobei der Strombefehlswert oder der Stromdetektionswert der m-Achse gleich null ist.

5. Leistungswandlervorrichtung (21, 27) nach Anspruch 3 oder 4, wobei
   die Drehzahlschätzungsberechnungseinheit (5) ausgelegt ist, um den Drehzahlschätzungswert des Induktionsmotors (1) unter Verwendung des Spannungsbefehlswerts der m-Achse, der Strombefehlswerte und der Stromdetektionswerte der m-Achse und der t-Achse, eines Sinus-Signals, einer Schaltungskonstante des Induktionsmotors (1), des Ausgangsfrequenzwerts und eines Schlupffrequenzbefehlswerts in einem niedrigen Drehzahlbereich zu berechnen, in dem ein Absolutwert eines Werts, der durch Multiplizieren eines Additionswerts, der durch Addieren eines Werts, der durch Multiplizieren eines Verlustinduktivitätswerts des Induktionsmotors (1) mit einem Strom der d-Achse erhalten wird, und eines Werts erhalten wird, der durch Dividieren einer Gegeninduktivität durch eine sekundäre Induktivität und Multiplizieren mit einem sekundären Induktionsstrom der d-Achse erhalten wird, mit dem Ausgangsfrequenzwert oder einem Drehzahlbefehlswert erhalten wird, kleiner ist als ein Absolutwert eines Werts, der durch Multiplizieren eines Hauptwiderstandswerts mit einem Strom der q-Achse erhalten wird.

6. Leistungswandlervorrichtung (21, 27) nach Anspruch 3 oder 4, wobei
   die Drehzahlschätzungsberechnungseinheit (5) ausgelegt ist, um den Drehzahlschätzungswert des Induktionsmotors (1) unter Verwendung des Spannungsbefehlswerts der t-Achse, der Strombefehlswerte und der Stromdetektionswerte der m-Achse und der t-Achse, eines Cosinus-Signals, einer Schaltungskonstante des Induktionsmotors (1), des Ausgangsfrequenzwerts und eines Schlupffrequenzbefehlswerts in einem mittelhohen Drehzahlbereich zu berechnen, in dem ein Absolutwert eines Werts, der durch Multiplizieren eines Additionswerts, der durch Addieren eines Werts, der durch Multiplizieren eines Verlustinduktivitätswerts des Induktionsmotors (1) mit einem Strom der d-Achse erhalten wird, und eines Werts erhalten wird, der durch Dividieren einer Gegeninduktivität durch eine sekundäre Induktivität und Multiplizieren mit einem sekundären Fluss der d-Achse erhalten wird, mit dem Ausgangsfrequenzwert oder einem Drehzahlbefehlswert erhalten wird, größer ist als ein Absolutwert eines Werts, der durch Multiplizieren eines Hauptwiderstandswerts mit einem Strom der q-Achse erhalten wird.

7. Leistungswandlervorrichtung (21, 27) nach Anspruch 3 oder 4, wobei
die Drehzahlschätzungsberechnungseinheit (5) ausgelegt ist, um den Drehzahlschätzungswert des Induktionsmotors (1) zwischen einem niedrigen Drehzahlbereich, in dem ein Absolutwert 1 eines Werts, der durch Multiplizieren eines Additionswerts, der durch Addieren eines Werts, der durch Multiplizieren eines Verlustinduktivitätswerts des Induktionsmotors (1) mit einem Strom der d-Achse erhalten wird, und eines Werts erhalten wird, der durch Dividieren einer Gegeninduktivität durch eine sekundäre Induktivität und Multiplizieren mit einem sekundären Fluss der d-Achse erhalten wird, mit dem Ausgangsfrequenzwert oder einem Drehzahlbefehlswert erhalten wird, kleiner ist als ein Absolutwert 2 eines Werts, der durch Multiplizieren eines Hauptwiderstandswerts mit einem Strom der q-Achse erhalten wird, und einem mittelhohen Drehzahlbereich, in dem der Absolutwert 1 größer ist als der Absolutwert 2, umzuschalten.

8. Leistungswandlervorrichtung (21, 27) nach Anspruch 7, wobei
ein Pegelwert, der zwischen dem niedrigen Drehzahlbereich und dem mittelhohen Drehzahlbereich umschaltet, automatisch unter Verwendung einer Schaltungskonstante des Induktionsmotors (1) und einer Nennfrequenz und eines Nennstromwerts, die in einem internen Speicher eingestellt sind, eingestellt wird.

9. Leistungswandlervorrichtung (21, 27) nach Anspruch 7, wobei
ein Schaltschwellenwert des niedrigen Drehzahlbereichs und des mittelhohen Drehzahlbereichs durch Verbinden einer Vorrichtung wie ein digitales Bedienfeld (27b) oder ein Personal Computer (28) oder Tablet (29) oder Smartphone (30) eingestellt und verändert werden kann.

10. Drehzahlschätzungsverfahren zur sensorlosen Drehzahlvektorsteuerung eines Induktionsmotors (1), wobei das Drehzahlschätzungsverfahren Folgendes umfasst:

Umwandeln eines Befehlswerts ($V_{dc}$**; $V_{qc}$**) oder eines Detektionswerts ($I_{dc}$; $I_{qc}$) in Steuerachsen unter Verwendung einer Hauptstromrichtung ($V_{tc}$**; $I_{tc}$) und einer Richtung ($V_{mc}$**; $I_{mc}$), die um 90 Grad von der Hauptstromrichtung verzögert ist, als drehendes Koordinatensystem unter Verwendung einer Koordinatenwandlereinheit (18, 19, 20); und
Berechnen eines Drehzahlschätzungswerts ($\omega_r$^^) des Induktionsmotors (1) basierend auf dem Befehlswert oder dem Detektionswert, die durch die Koordinatenwandlereinheit (18, 19, 20) umgewandelt wurden, unter Verwendung einer Drehzahlschätzungsberechnungseinheit (5).

11. Drehzahlschätzungsverfahren nach Anspruch 10, wobei:
das Umwandeln des Befehlswerts oder des Detektionswerts in die Steuerachsen das Berechnen von Strombefehlswerten oder Stromdetektionswerten und Spannungsbefehlswerten einer t-Achse, die eine Hauptstromrichtung ist, und einer m-Achse, die eine Richtung ist, die um 90 Grad von der t-Achse verzögert ist, unter Verwendung eines Sinus-Signals und eines Cosinus-Signals eines Subtraktionswert, der durch Dividieren eines Strombefehlswerts oder eines Stromdetektionswerts der q-Achse des Induktionsmotors (1) durch einen Strombefehlswert oder einen Stromdetektionswert der d-Achse und Subtrahieren eines inversen Tangens-Signals des dividierten Werts von 90 Grad erhalten wird, und der Strombefehlswerte oder Stromdetektionswerte und Spannungsbefehlswerte der d-Achse und der q-Achse umfasst.

12. Drehzahlschätzungsverfahren nach Anspruch 11, wobei
ein Strombefehlswert oder Stromdetektionswert der t-Achse eine Quadratwurzel eines Additionswerts eines Werts, der durch Quadrieren des Strombefehlswerts oder Stromdetektionswerts der d-Achse erhalten wird, und eines Werts ist, der durch Quadrieren des Strombefehlswerts oder des Stromdetektionswerts der q-Achse erhalten wird, und wobei der Strombefehlswert oder der Stromdetektionswert der m-Achse gleich null ist.

13. Drehzahlschätzungsverfahren nach Anspruch 11 oder 12, wobei
der Drehzahlschätzungswert unter Verwendung des Spannungsbefehlswerts der m-Achse, der Strombefehlswerte und der Stromdetektionswerte der m-Achse und der t-Achse, eines Sinus-Signals, einer Schaltungskonstante des Induktionsmotors (1), des Ausgangsfrequenzwerts und eines Schlupffrequenzbefehlswerts in einem niedrigen Drehzahlbereich berechnet wird, in dem ein Absolutwert eines Werts, der durch Multiplizieren eines Additionswerts, der durch Addieren eines Werts, der durch Multiplizieren eines Verlustinduktivitätswerts des Induktionsmotors (1) mit einem Strom der d-Achse erhalten wird, und eines Werts erhalten wird, der durch Dividieren einer Gegeninduktivität durch eine sekundäre Induktivität und Multiplizieren mit einem sekundären Induktionsstrom der d-Achse erhalten wird, mit dem Ausgangsfrequenzwert oder einem Drehzahlbefehlswert erhalten wird, kleiner ist als ein Absolutwert eines Werts, der durch Multiplizieren eines Hauptwiderstandswerts mit einem Strom der q-Achse erhalten wird.

**14.** Drehzahlschätzungsverfahren nach Anspruch 11 oder 12, wobei
der Drehzahlschätzungswert unter Verwendung des Spannungsbefehlswerts der t-Achse, der Strombefehlswerte und der Stromdetektionswerte der m-Achse und der t-Achse, eines Cosinus-Signals, einer Schaltungskonstante des Induktionsmotors (1), des Ausgangsfrequenzwerts und eines Schlupffrequenzbefehlswerts in einem mittelhohen Drehzahlbereich berechnet wird, in dem ein Absolutwert eines Werts, der durch Multiplizieren eines Additionswerts, der durch Addieren eines Werts, der durch Multiplizieren eines Verlustinduktivitätswerts des Induktionsmotors (1) mit einem Strom der d-Achse erhalten wird, und eines Werts erhalten wird, der durch Dividieren einer Gegeninduktivität durch eine sekundäre Induktivität und Multiplizieren mit einem sekundären Fluss der d-Achse erhalten wird, mit dem Ausgangsfrequenzwert oder einem Drehzahlbefehlswert erhalten wird, größer ist als ein Absolutwert eines Werts, der durch Multiplizieren eines Hauptwiderstandswerts mit einem Strom der q-Achse erhalten wird.

**15.** Drehzahlschätzungsverfahren nach Anspruch 11 oder 12, wobei
der Drehzahlschätzungswert zwischen einem niedrigen Drehzahlbereich, in dem ein Absolutwert 1 eines Werts, der durch Multiplizieren eines Additionswerts, der durch Addieren eines Werts, der durch Multiplizieren eines Verlustinduktivitätswerts des Induktionsmotors (1) mit einem Strom der d-Achse erhalten wird, und eines Werts erhalten wird, der durch Dividieren einer Gegeninduktivität durch eine sekundäre Induktivität und Multiplizieren mit einem sekundären Fluss der d-Achse erhalten wird, mit dem Ausgangsfrequenzwert oder einem Drehzahlbefehlswert erhalten wird, kleiner ist als ein Absolutwert 2 eines Werts, der durch Multiplizieren eines Hauptwiderstandswerts mit einem Strom der q-Achse erhalten wird, und einem mittelhohen Drehzahlbereich, in dem der Absolutwert 1 größer ist als der Absolutwert 2, umgeschaltet wird.


**Revendications**

**1.** Dispositif de conversion de puissance (21, 27) qui entraîne un moteur à induction (1) par commande vectorielle sans capteur de vitesse, comprenant :

une unité de conversion de coordonnées (18, 19, 20) configurée pour convertir une valeur d'instruction ($V_{dc}$** ; $V_{qc}$**) ou une valeur de détection ($I_{dc}$ ; $I_{qc}$) en axes de commande en utilisant une direction de courant principale ($V_{tc}$** ; $I_{tc}$) et une direction ($V_{mc}$** : $I_{mc}$) retardée de 90 degrés à partir de la direction de courant principale en tant que système de coordonnées rotatif ; et
une unité de calcul d'estimation de vitesse (5) configurée pour calculer une valeur d'estimation de vitesse ($\omega_r$^^) du moteur à induction (1) sur la base de la valeur d'instruction ou de la valeur de détection convertie par l'unité de conversion de coordonnées (18, 19, 20), dans lequel :
une valeur de fréquence de sortie est commandée sur la base de la valeur d'estimation de vitesse.

**2.** Dispositif de conversion de puissance (21, 27) selon la revendication 1, comprenant en outre :
une unité de calcul de commande vectorielle (11) configurée pour effectuer un calcul de commande vectorielle sur la base de la valeur d'instruction ou de la valeur de détection convertie par l'unité de conversion de coordonnées (18, 19, 20).

**3.** Dispositif de conversion de puissance (21, 27) selon la revendication 1 ou 2, dans lequel
l'unité de conversion de coordonnées (18, 19, 20) est configurée pour calculer des valeurs d'instruction de courant ou des valeurs de détection de courant et des valeurs d'instruction de tension d'un axe t qui est la direction de courant principale et d'un axe m qui est une direction retardée de 90 degrés par rapport à l'axe t en utilisant un signal de sinus et un signal de cosinus d'une valeur de soustraction obtenue en divisant une valeur d'instruction de courant ou une valeur de détection de courant d'axe q du moteur à induction (1) par une valeur d'instruction de courant ou une valeur de détection de courant d'axe d et en soustrayant un signal de tangente inverse de la valeur divisée à partir de 90 degrés, et les valeurs d'instruction de courant ou les valeurs de détection de courant et les valeurs d'instruction de tension de l'axe d et de l'axe q.

**4.** Dispositif de conversion de puissance (21, 27) selon la revendication 3, dans lequel
une valeur d'instruction de courant d'axe t ou une valeur de détection de courant est une racine carrée d'une valeur d'addition d'une valeur obtenue en élevant au carré la valeur d'instruction de courant d'axe d ou la valeur de détection de courant et une valeur obtenue en élevant au carré la valeur d'instruction de courant ou la valeur de détection de courant d'axe q, et la valeur d'instruction de courant ou la valeur de détection de courant d'axe m est nulle.

**5.** Dispositif de conversion de puissance (21, 27) selon la revendication 3 ou 4, dans lequel

l'unité de calcul d'estimation de vitesse (5) est configurée pour calculer la valeur d'estimation de vitesse du moteur à induction (1) en utilisant la valeur d'instruction de tension d'axe m, les valeurs d'instruction de courant et les valeurs de détection de courant de l'axe m et de l'axe t, un signal de sinus, une constante de circuit du moteur à induction (1), la valeur de fréquence de sortie et une valeur d'instruction de fréquence de glissement dans une plage de vitesse basse dans laquelle une valeur absolue d'une valeur obtenue en multipliant une valeur d'addition, qui est obtenue en ajoutant une valeur obtenue en multipliant une valeur d'inductance de fuite du moteur à induction (1) par un courant d'axe d et une valeur obtenue en divisant une inductance mutuelle par une inductance secondaire et en multipliant par un flux secondaire d'axe d, par la valeur de fréquence de sortie ou une valeur d'instruction de vitesse, est inférieure à une valeur absolue d'une valeur obtenue en multipliant une valeur de résistance principale par un courant d'axe q.

6. Dispositif de conversion de puissance (21, 27) selon la revendication 3 ou 4, dans lequel
l'unité de calcul d'estimation de vitesse (5) est configurée pour calculer la valeur d'estimation de vitesse du moteur à induction (1) en utilisant la valeur d'instruction de tension d'axe t, les valeurs d'instruction de courant et les valeurs de détection de courant de l'axe m et de l'axe t, un signal de cosinus, une constante de circuit du moteur à induction (1), la valeur de fréquence de sortie et une valeur d'instruction de fréquence de glissement dans une plage de vitesse moyenne à élevée dans laquelle une valeur absolue d'une valeur obtenue en multipliant une valeur d'addition, qui est obtenue en ajoutant une valeur obtenue en multipliant une valeur d'inductance de fuite du moteur à induction (1) par un courant d'axe d et une valeur obtenue en divisant une inductance mutuelle par une inductance secondaire et en multipliant par un flux secondaire d'axe d, par la valeur de fréquence de sortie ou une valeur d'instruction de vitesse, est supérieure à une valeur absolue d'une valeur obtenue en multipliant une valeur de résistance principale par un courant d'axe q.

7. Dispositif de conversion de puissance (21, 27) selon la revendication 3 ou 4, dans lequel
l'unité de calcul d'estimation de vitesse (5) est configurée pour commuter la valeur d'estimation de vitesse du moteur à induction (1) entre une plage de vitesse basse dans laquelle une valeur absolue 1 d'une valeur obtenue en multipliant une valeur d'addition, qui est obtenue en ajoutant une valeur obtenue en multipliant une valeur d'inductance de fuite du moteur à induction (1) par un courant d'axe d et une valeur obtenue en divisant une inductance mutuelle par une inductance secondaire et en multipliant par un flux secondaire d'axe d, par la valeur de fréquence de sortie ou une valeur d'instruction de vitesse, est inférieure à une valeur absolue 2 d'une valeur obtenue en multipliant une valeur de résistance principale par un courant d'axe q, et une plage de vitesse moyenne-élevée dans laquelle la valeur absolue 1 est supérieure à la valeur absolue 2.

8. Dispositif de conversion de puissance (21, 27) selon la revendication 7, dans lequel
une valeur de niveau qui commute entre la plage de vitesse basse et la plage de vitesse moyenne à élevée est automatiquement réglée en utilisant une constante de circuit du moteur à induction (1) et une fréquence nominale et une valeur de courant nominale réglées dans une mémoire interne.

9. Dispositif de conversion de puissance (21, 27) selon la revendication 7, dans lequel
un seuil de commutation de la plage de vitesse basse et de la plage de vitesse moyenne-élevée peut être réglé et modifié en connectant un opérateur numérique (27b) ou un ordinateur personnel (28) ou une tablette (29) ou un dispositif de téléphone intelligent (30).

10. Procédé d'estimation de vitesse pour une commande vectorielle sans capteur de vitesse d'un moteur à induction (1), le procédé d'estimation de vitesse comprenant les étapes consistant à :

convertir, en utilisant une unité de conversion de coordonnées (18, 19, 20), une valeur d'instruction ($V_{dc}$\*\*, $V_{qc}$\*\*) ou une valeur de détection ($I_{dc}$ ; $I_{qc}$) en axes de commande en utilisant une direction de courant principale ($V_{tc}$\*\* ; $I_{tc}$) et une direction ($V_{mc}$\*\* : $I_{mc}$) retardée de 90 degrés à partir de la direction de courant principale en tant que système de coordonnées rotatif ; et
calculer, en utilisant une unité de calcul d'estimation de vitesse (5), une valeur d'estimation de vitesse ($\omega_r$^^) du moteur à induction (1) sur la base de la valeur d'instruction ou de la valeur de détection convertie par l'unité de conversion de coordonnées (18, 19, 20).

11. Procédé d'estimation de vitesse selon la revendication 10, dans lequel :
la conversion de la valeur d'instruction ou de la valeur de détection en axes de commande comprend un calcul de valeurs d'instruction de courant ou de valeurs de détection de courant et de valeurs d'instruction de tension d'un axe t qui est une direction de courant principale et d'un axe m qui est une direction retardée de 90 degrés par rapport à l'axe t en utilisant un signal de sinus et un signal de cosinus d'une valeur de soustraction obtenue en divisant une valeur d'instruction de courant d'axe q ou une valeur de détection de courant du moteur à induction (1) par une valeur d'instruction de courant ou une valeur de détection de courant d'axe d et en soustrayant un signal de tangente inverse de la valeur divisée à partir de 90 degrés, et les valeurs d'instruction de courant ou les valeurs de détection de courant et les valeurs d'instruction de tension de l'axe d et de l'axe q.

12. Procédé d'estimation de vitesse selon la revendication 11, dans lequel une valeur d'instruction de courant ou une valeur de détection de courant d'axe t est une racine carrée d'une valeur d'addition d'une valeur obtenue en élevant au carré la valeur d'instruction de courant ou la valeur de détection de courant d'axe d et d'une valeur obtenue en élevant au carré la valeur d'instruction de courant ou la valeur de détection de courant d'axe q, et la valeur d'instruction de courant ou la valeur de détection de courant d'axe m est nulle.

13. Procédé d'estimation de vitesse selon la revendication 11 ou 12, dans lequel :
la valeur d'estimation de vitesse est calculée en utilisant la valeur d'instruction de tension d'axe m, les valeurs d'instruction de courant et les valeurs de détection de courant de l'axe m et de l'axe t, un signal de sinus, une constante de circuit du moteur à induction (1), la valeur de fréquence de sortie, et une valeur d'instruction de fréquence de glissement dans une plage de vitesse basse dans laquelle une valeur absolue d'une valeur obtenue en multipliant une valeur d'addition, qui est obtenue en ajoutant une valeur obtenue en multipliant une valeur d'inductance de fuite du moteur à induction (1) par un courant d'axe d et une valeur obtenue en divisant une inductance mutuelle par une inductance secondaire et en multipliant par un flux secondaire d'axe d, par la valeur de fréquence de sortie ou une valeur d'instruction de vitesse, est inférieure à une valeur absolue d'une valeur obtenue en multipliant une valeur de résistance principale par un courant d'axe q.

14. Procédé d'estimation de vitesse selon la revendication 11 ou 12, dans lequel :
la valeur d'estimation de vitesse est calculée en utilisant la valeur d'instruction de tension d'axe t, les valeurs d'instruction de courant et les valeurs de détection de courant de l'axe m et de l'axe t, un signal de cosinus, une constante de circuit du moteur à induction (1), la valeur de fréquence de sortie, et une valeur d'instruction de fréquence de glissement dans une plage de vitesse moyenne à élevée dans laquelle une valeur absolue d'une valeur obtenue en multipliant une valeur d'addition, qui est obtenue en ajoutant une valeur obtenue en multipliant une valeur d'inductance de fuite du moteur à induction (1) par un courant d'axe d et une valeur obtenue en divisant une inductance mutuelle par une inductance secondaire et en multipliant par un flux secondaire d'axe d, par la valeur de fréquence de sortie ou une valeur d'instruction de vitesse, est supérieure à une valeur absolue d'une valeur obtenue en multipliant une valeur de résistance principale par un courant d'axe q.

15. Procédé d'estimation de vitesse selon la revendication 11 ou 12, dans lequel :
la valeur d'estimation de vitesse est commutée entre une plage de vitesse basse dans laquelle une valeur absolue 1 d'une valeur obtenue en multipliant une valeur d'addition, qui est obtenue en ajoutant une valeur obtenue en multipliant une valeur d'inductance de fuite du moteur à induction (1) par un courant d'axe d et une valeur obtenue en divisant une inductance mutuelle par une inductance secondaire et en multipliant par un flux secondaire d'axe d, par la valeur de fréquence de sortie ou une valeur d'instruction de vitesse, est inférieure à une valeur absolue 2 d'une valeur obtenue en multipliant une valeur de résistance principale par un courant d'axe q, et une plage de vitesse moyenne-élevée dans laquelle la valeur absolue 1 est supérieure à la valeur absolue 2.

[FIG. 1]

[FIG. 2]

[FIG. 3]

## VECTOR (d-q) AXES

q-AXIS

$$i_l = \sqrt{i_d{}^2 + i_q{}^2}$$

$$\theta_\phi = \tan^{-1}\left[\frac{i_q}{i_d}\right]$$

[FIG. 4]

## PRIMARY CURRENT (m-t) AXES

q-AXIS   t-AXIS

$$i_l = \sqrt{i_m{}^2 + i_t{}^2}$$

$$i_m = 0$$

$$i_t = i_l$$

[FIG. 5]

[FIG. 6]

[FIG. 7]

[FIG. 8]

[FIG. 9]

[FIG. 10]

**EP 3 614 559 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6105580 A
- JP 2005057963 A
- WO 2016139998 A1